# EUROPEAN PATENT APPLICATION

(11) **EP 3 178 327 A1**
(43) Date of publication of application: **14.06.2017**
(21) Application number: 16002623.3
(22) Date of filing: 07.12.2016
(51) Int. Cl.: A22C 13/00

(54) **A NET FOR FOOD PRODUCTS, IN PARTICULAR A NET FOR COLD MEAT PRODUCTS**

(30) Priority: 08.12.2015 PL 41518615
(71) Applicant: Nomanet Sp. z o.o., 41-945 Piekary Slaskie (PL)
(72) Inventor: Janus, Marek, 41-945 Piekary Slaskie (PL)
(74) Representative: Lukaszyk, Szymon

(57) **Abstract**

The present invention relates to a net for food products, in particular a net for cold meat products, which is formed of transversal fibers (3) and longitudinal fibers (2) that are intermutually interwoven with each other, and comprises at least one tagging label (4a). In order to prevent an easy detachment of the tagging label from the net, the at least one tagging label is sewn on to at least one transversal fiber and/or at least one longitudinal fiber.

## Description

The present invention relates to a net for food products, in particular a net for cold meat products, that is formed of transversal fibers and longitudinal fibers which are intermutually interwoven with each other, and comprises at least one tagging label.

### Background of the invention

A wide range of food products exists which products are packaged in nets constituting the only one packaging thereof. A net packaging obviously requires an appropriate marking. Therefore in the prior art it has been proposed to provide food product nets with tagging labels forming additional elements bearing various textual and/or graphic information, such as for example a type of a product, a material composition of a product and/or a name or logotype of a producer of a product or net. In consideration of specificity of a net as a support for fixing a tagging label, there have been proposed many various types of connections between a tagging label and a net.

For example the patent publication PL 216 915 B1 discloses a net apt for packaging food products, in particular cold meat products, and having a form of a sleeve woven using a string and an elastic weft, wherein in the nodes of this net a tagging label is inwoven in a form of a band for tagging a product. Food products packaged in a net are translocated many times, for example during a subsequent treatment (for example for smoking), storage, transportation or disposing such nets for sale. In each such step a net and a tagging label itself are exposed to a risk of a damage, and therefore reliability of a connection of a tagging label to a net is not guaranteed. Sections between neighbouring locations of inweaving the tagging label constitute sections in which protrusive loops are formed. A hitch against such a loop being hooked may in turn result in breaking the tagging label. The breaking of the tagging label may then cause unweaving the tagging label progressively from the nodes of the net, until achieving a complete disconnection of the tagging label from the net, disabling for an unambiguous identification of a product.

Furthermore as disclosed in the patent publication PL 216 915 B1, the tagging label has to be fastened yet during a process of weaving a net. Therefore particular type of tagging labels have to be available and used yet during a production of a net. Thus interweaving of a tagging label in a node of a net does not enable for later adding tagging labels.

Furthermore, tagging labels are known that are fixed to food product nets by means of gluing, welding or clamping clips. Exemplary nets with tagging label fixed in such manners are disclosed in publications EP1498035, DE4019126 and WO2011044324.

The object of the present invention was to provide an alternative manner for attaching a tagging label to a net for food products, which manner lacks inconveniences related with prior art solutions.

### Summary of the invention

In order to accomplish the aforementioned and other objects according to the present invention there is provided a net for food products, in particular a net for cold meat products, which is formed of transversal fibers and longitudinal fibers that are intermutually interwoven with each other, and comprises at least one tagging label, which is characterized in that the at least one tagging label is sewn on to at least one transversal fiber and/or at least one longitudinal fiber. Sewing on tagging labels according to the present invention prevents a spontaneous tearing off of a tagging label from a net during storage, transportation or disposing such net for sale. Sewing on a tagging label may be effected according to the present invention as a point sewing together or by means of any arbitrary sewing stitch.

The net according to the present invention preferably has a form of a sleeve comprising longitudinal fibers in an amount of 2-200 fibers on the circumference of the net and transversal fibers in an amount of 1-200 fibers per 50 cm of the net length. In such invention embodiments, a net mesh arrangement is formed which is particularly preferred for a packaging of cold meat products. The net according to the present invention may also obviously have a form of a flat sheet from which any arbitrary shape may be formed fit to a given food product.

The tagging label of the present invention is preferably sewn on to the net by means of a stitch, preferably an overlock stitch or a cross-stitch. These stitches ensure a durable fastening of the tagging label to the net, though another arbitrary stitches may be also obviously used, such as for example an overcast stitch.

The tagging label of the present invention is preferably sewn on to the net by means of a number of separate stitch sections. It decreases a production cost with a relatively low decrease of connection durability.

The tagging label of the present invention is preferably sewn on to the net along the edge of the tagging label. It increases discernibility of the information presented on the tagging label.

Alternatively, the tagging label is preferably sewn on to the net askew over the net surface.

The tagging label of the present invention has preferably a form of a band, preferably having a width of 5-100 mm, in particular having a width of 10-25 mm.

The tagging label of the present invention is preferably sewn on the net in a corrugated state of the tagging label. A corrugation of the tagging label compensates for an expansion of the net, whereas in such an embodiment the tagging label itself does not have to be made of an elastic material.

The tagging label of the present invention may be preferably elastic, wherein preferably the label is preferably elastic at least along the longitudinal direction of fibers to which the label is sewn on. The tagging label elasticity also compensates for an expansion of the net filled up with a food product.

The tagging label of the present invention is preferably made of a textile fabric or a continuous material sheet. Textile fabrics ensure a high breaking strength.

The tagging label of the present invention preferably comprises a protective coating, preferably a transparent protective coating. During storage or transportation of a net, tagging labels may be spoiled, thus making impossible to identify a product. The preferably transparent, protective coating protects the tagging label of the present invention with ensuring the label readability. The protective coating may obviously be applied on one side of the label or on both sides of the label. The coating is preferably composed of layers of polymer resins, such as in particular a dispersion of a mixture of acrylic resins, vinyl resins and/or polyurethane resins. The protective coating may be also formed by means of a lamination process using polymer foils.

The tagging label of the present invention preferably comprises an identification area, which preferably comprises an overprint and/or an embroidery and/or a laser or ultrasonic engraving.

The net according to the present invention is preferably a net for cold meat products, and sewing on the tagging label to such a net forms a very durable, reliable and furthermore very simple manner of the tagging label attachment.

### Brief description of the drawings

This and other features of the present invention shall be presented below in exemplary embodiments and in connection with the attached drawings on which:
Fig. 1 illustrates schematically an embodiment of a net according to the present invention, in which the tagging label is sewn on to a single longitudinal fiber of the net;
Fig. 2 illustrates schematically an alternative embodiment of the net of Fig. 1, in which the tagging label is comprised of a number of sections;
Fig. 3 illustrates schematically further embodiment of the net according to the present invention, in which the tagging label is sewn on to a single transversal fiber of the net,
Fig. 4 illustrates schematically an alternative embodiment of the net of Fig. 3, in which the tagging label is composed of a number of sections;
Fig. 5 illustrates schematically another embodiment of the net according to the present invention, in which the first tagging label is sewn on to a single longitudinal fiber and the second tagging label is sewn on to a single transversal fiber;
Fig. 6 illustrates schematically an alternative embodiment of the net comprising one continuous tagging label sewn on to two longitudinal fibers of the net;
Fig. 7 illustrates schematically another embodiment of the net provided with the skew tagging label;
Fig. 8 illustrates schematically another embodiment of the net provided with the tagging label in a form of a banderole;
Fig. 9 illustrates schematically yet another embodiment of the net provided with the tagging label sewn on in a rolled state of the tagging label having a circular-like cross-section; and
Fig. 10 illustrates schematically yet another embodiment of the net provided with the tagging label sewn on in a state of its longitudinal bend, wherein the bend substantially runs through the central line of the label surface, producing a "tear-like" shape of the label cross-section.

### Detailed description of preferred embodiments

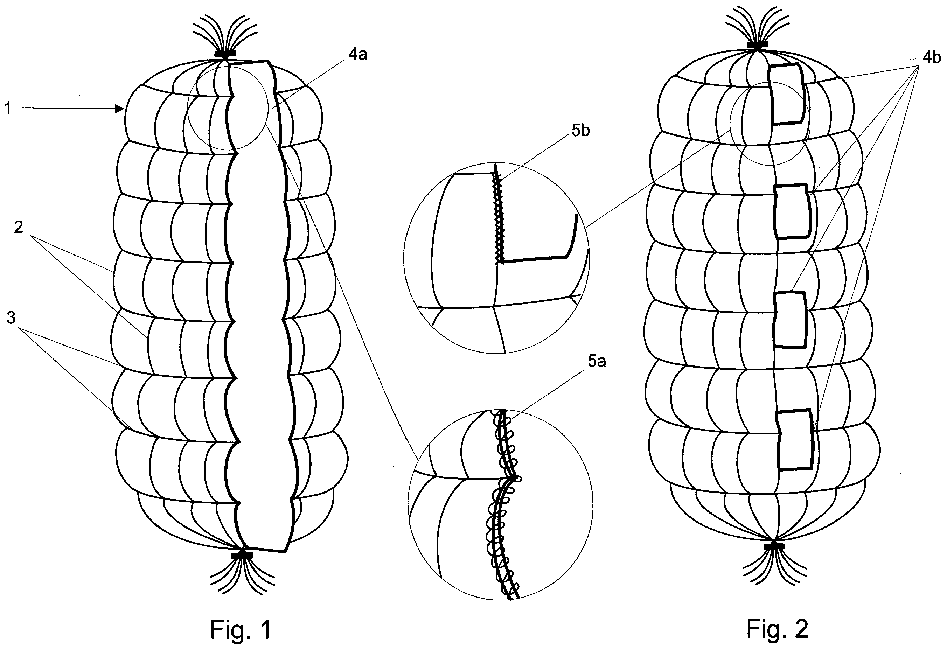

Figs. 1-10 present the embodiments of the net 1 for food products according to the present invention in the state of its pulling on onto a cylindrical food product. The net 1 has been produced in a process of interweaving longitudinal fibers 2 (wales) made of natural hemp fibers and transversal fibers 3 (courses) made of synthetic polyamide fibers (nylon).

The net 1 may be obviously produced in any arbitrary method known from the prior art, as well as from various materials of longitudinal and transversal fibers, such as for example natural cellulose fibers such as cotton fiber, flax fiber, ramie fiber, jute fiber, sisal fiber or coconut fiber; natural protein fibers such as wool or natural silk, artificial fibers (for example cellulose fibers such as viscose rayon, lyocell, acetate silk, collodion silk; protein fibers such as casein fibers or vegetable protein fibers), synthetic fibers (for example polyamide fibers such as stilon or perlon; polyester fibers such as terylen or polyester; polyacrylonitrile fibers such as dacron or artificial fiber; polyurethane fibers such as lycra; aramid fibers such as kevlar; carbon fibers), mineral fibers (such as for example mineral flax, glass fibers, metallic fibers). The net according to the present invention also comprise polyester yarns, polypropylene yarns, cotton yarns, polyester-cotton yarns, polyethylene yarns, PET yarns, PVA yarns, natural latex/rubber threads (natural rubber) i/lub synthetic latex threads (synthetic rubber). Longitudinal fibers and transversal fibers of the net according to the present invention may be obviously made of any arbitrary combination of the above mentioned materials, so that it is possible to set an elasticity of the net over a wide range enabling for weaving inelastic nets as well as nets of a predetermined elasticity.

Numeral references of elements performing the same or similar functions remain the same on all figures, wherein additional suffixes (a, b, ...) are employed, where appropriate, to differentiate variants of the corresponding elements of the same or similar functionality but of different constructions.

The net depicted in Fig. 1 is provided with the tagging label 4a in a form of an inelastic continuous band having a width of about 20 mm, made of paper coated with a PVDC layer. The edge of the tagging label 4a is sewn on to a single longitudinal fiber 2 of the net 1 in a corrugated state of the label by means of a continuous stitch 5a of an overlock type.

The net depicted in Fig. 2 is provided with the tagging label 4b in a form of sections made of a band of a dermatoid material of a width amounting about 30 mm. The edges of the band sections are sewn on by means of continuous cross-stitches 5b to a single longitudinal fiber 2 of the net.

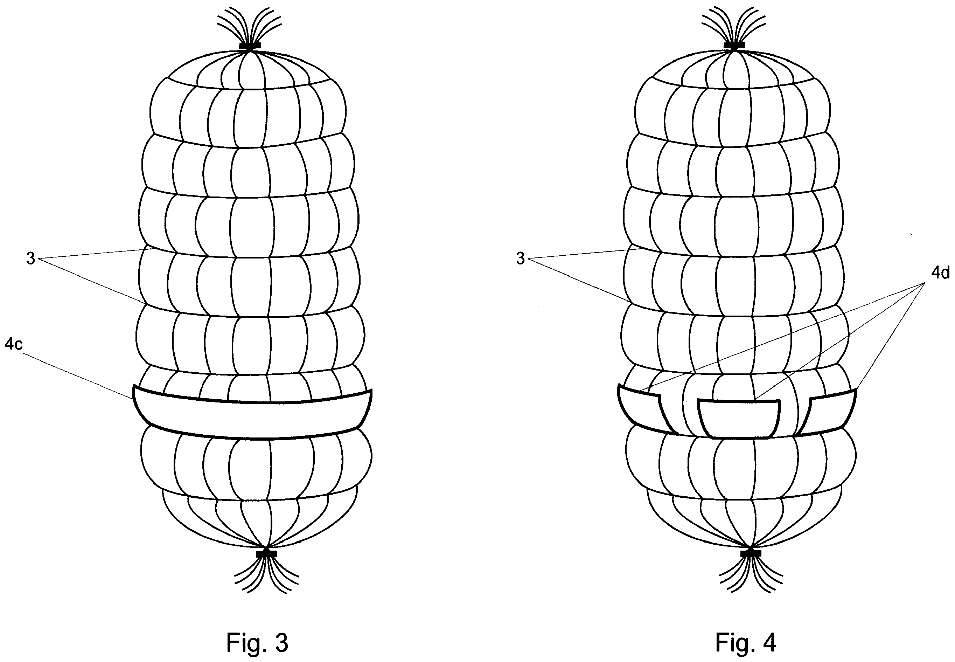

The net depicted in Fig. 3 is provided with the tagging label 4c made of a polyester unwoven cloth in a form of a continuous band of a width amounting about 10 mm. The tagging label 4c is sewn on by means of a continuous overlock stitch to a single transversal fibers 3 of the net.

The net depicted in Fig. 4 is provided with the tagging label 4d in a form of sections of a polyester foil of a width amounting about 35 mm. The edges of the sections are sewn on to a single transversal fiber 3 of the net.

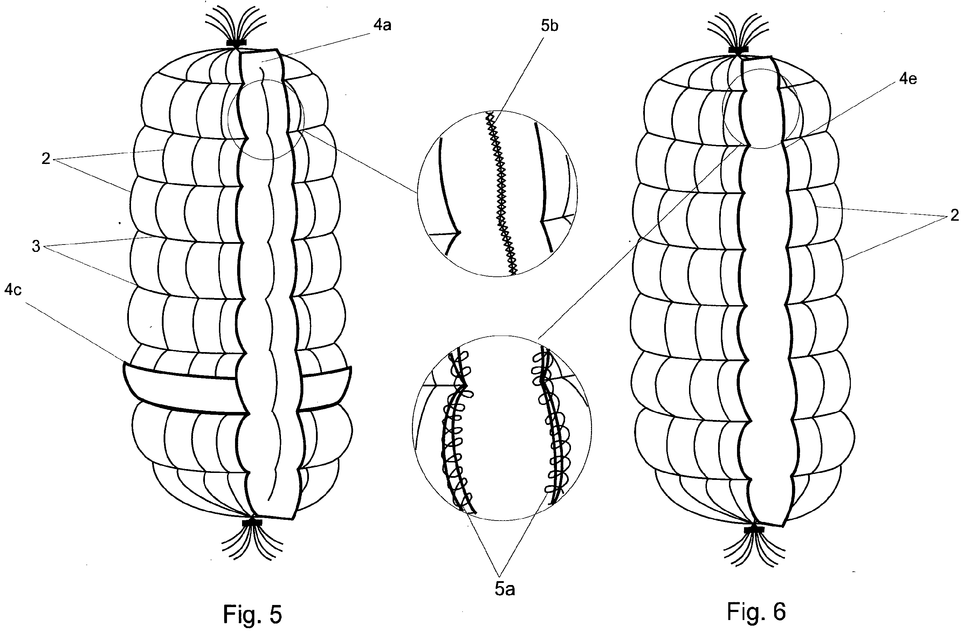

The net depicted in Fig. 5 is provided with two continuous tagging labels 4a and 4c. The first tagging label 4a is made of a cotton knitted fabric and has a width of about 20 mm, and the second tagging label 4c is made of a polycarbonate foil and has a width of about 25 mm. The tagging label 4c is sewn on along its edge to a single transversal fiber 3 of the net, and the tagging label 4a is sewn on to a single longitudinal fiber 2 of the net by means of an overlock stitch 5 running substantially along the central line of the surface of the first label 4a.

The net depicted in Fig. 6 is provided with the tagging label 4e in a form of a continuous band made of polyester unwoven cloth of a width amounting about 10 mm. The band is sewn on in its corrugated state to two neighbouring longitudinal fibers 2 by means of two continuous stitches 5a of an overlock type.

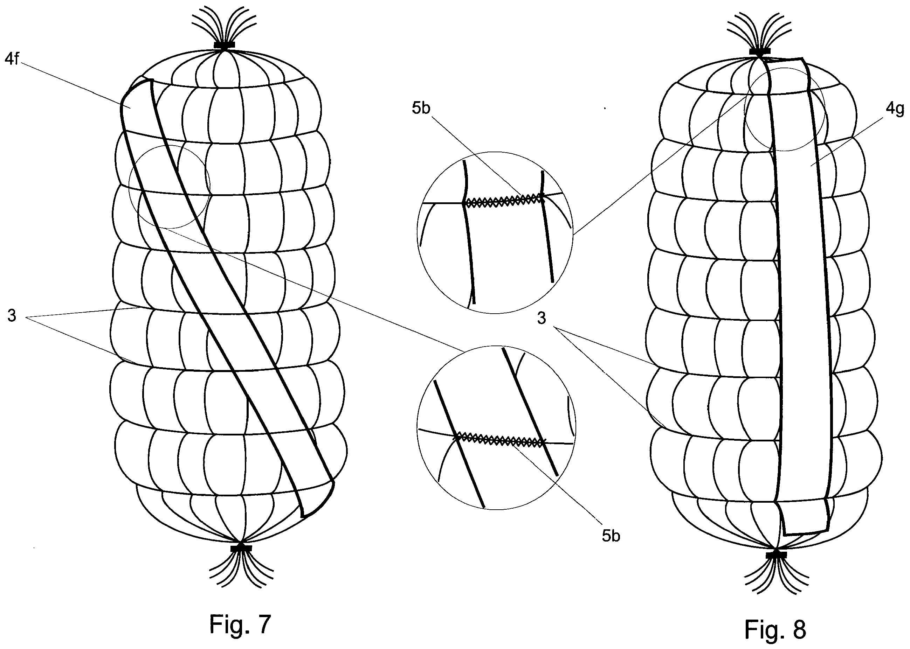

The net depicted in Fig. 7 is provided with the tagging label 4f in a form of a continuous inelastic band made of chiffon and having a width of about 25 mm. The band is sewn on in its corrugated state by means of a continuous cross-stitch 5b running throughout the surface thereof, and has a skew orientation relative to the eight transversal fibers 3 of the net 1.

The net depicted in Fig. 8 is provided with the tagging label 4g in a form of a continuous inelastic band (a banderole) made of nylon and having a width of about 30 mm. Two opposite ends of the band are sewn on in a corrugated state to two transversal fibers 3 of the net 1 by means of a continuous cross-stitch 5b.

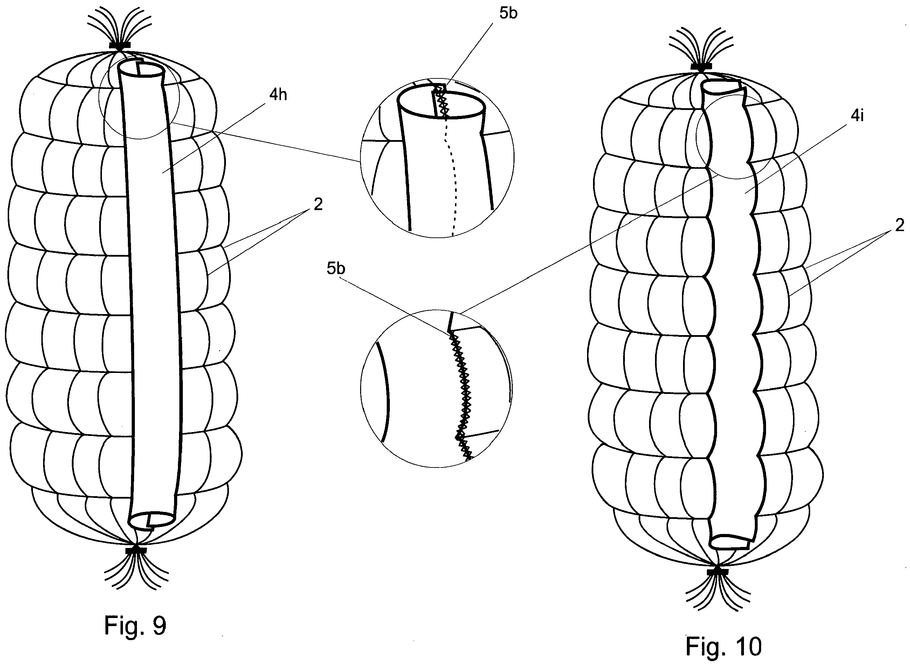

The net depicted in Fig. 9 is provided with the tagging label 4h in a form of a continuous band made of a polyester unwoven cloth and having a width of about 70 mm. The band is longitudinally rolled and both of its longitudinal edges are sewn on one upon the other in a corrugated state by means of a common cross-stitch 5b to a single longitudinal fiber 2 of the net 1, thus forming a circular-like cross-section of the tagging label.

The net depicted in Fig. 10 is provided with the tagging label 4i in a form of an inelastic band made of a rep unwoven cloth and having a width of about 80 mm. The band is sewn on in a state of its longitudinal bend, wherein the bend substantially runs through the central line of the label surface. Both longitudinal edges of the band are sewn on in their corrugated state to a single longitudinal fiber 2 of the net 1 by means of a common cross-stitch 5b, thus producing a "tear-like" shape of the label cross-section.

In alternative embodiments, not shown in the figures, longitudinal fibers and transversal fibers of the net according to the present invention may be constructed of any arbitrary natural or synthetic fibers and/or threads, for example connected by means of an appropriate weave such as for example a chain weave or produced in a knitting process. The fibers may be elastic in order to produce a net of the shape adjusting itself to the shape of a given product. In particular, the net of the present invention may have a cylindrical shape formed of longitudinal fibers connected by means of transversal fibers creating loops perpendicular relative to the longitudinal axis of the net or transversal fibers running helically and slantingly relative to the net longitudinal axis.

The above embodiments of the present invention are merely exemplary. The figures are not necessarily to scale, and some features may be exaggerated or minimized. Therefore the presented embodiments should not be considered as limiting the spirit of the invention, the intended scope of protection of which is indicated in the appended claims.

## Claims

1. A net for food products, in particular a net for cold meat products, which is formed of transversal fibers (3) and longitudinal fibers (2) that are intermutually interwoven with each other, and comprises at least one tagging label (4), **characterized in that** the at least one tagging label (4) is sewn on to at least one transversal fiber (3) and/or at least one longitudinal fiber (2).

2. The net according to Claim 1, **characterized in that** it has a form of a sleeve comprising the longitudinal fibers (2) in an amount of 2-200 fibers on the circumference of the net (1) and the transversal fibers (3) in an amount of 1-200 fibers per 50 cm of the net (1) length.

3. The net according to Claim 1 or 2, **characterized in that** the tagging label (4) is sewn on to the net (1) by means of a stitch (5), preferably an overlock stitch (5a) or a cross-stitch (5b).

4. The net according to Claim 3, **characterized in that** the tagging label (4) is sewn on to the net (1) by means of a number of separate stitch sections.

5. The net according to Claim 1 or 2 or 3 or 4, **characterized in that** the tagging label (4) is sewn on to the net (1) along the edge of the tagging label (4).

6. The net according to Claim 1 or 2 or 3 or 4, **characterized in that** the tagging label (4) is sewn on to the net (1) askew over the net surface.

7. The net according to any one of the preceding Claims, **characterized in that** the tagging label (4) has a form of a band, preferably having a width of 5-100 mm, in particular having a width of 10-25 mm.

8. The net according to any one of the preceding Claims, **characterized in that** the tagging label (4) is sewn on to the net (1) in a corrugated state of the tagging label (4).

9. The net according to any one of the preceding Claims, **characterized in that** the tagging label (4) is elastic, wherein the label is elastic preferably at least along the longitudinal direction of the fibers to which the label is sewn on.

10. The net according to any one of the preceding Claims, **characterized in that** the tagging label (4) is made of a textile fabric or a continuous material sheet.

11. The net according to any one of the preceding Claims, **characterized in that** the tagging label (4) comprises a protective coating, preferably a transparent protective coating.

12. The net according to any one of the preceding Claims, **characterized in that** the tagging label (4) comprises an identification area, which preferably comprises an overprint and/or an embroidery and/or a laser or ultrasonic engraving.
